(19)

Europäisches Patentamt

European Patent Office

Office européen des brevets

(11)     **EP 3 951 984 A1**

(12)                          **EUROPEAN PATENT APPLICATION**
                              published in accordance with Art. 153(4) EPC

(43) Date of publication:
     **09.02.2022 Bulletin 2022/06**

(21) Application number: **20837159.1**

(22) Date of filing: **10.07.2020**

(51) International Patent Classification (IPC):
     **H01M 10/0563** (2010.01)     **H01M 10/052** (2010.01)

(52) Cooperative Patent Classification (CPC):
     **H01M 10/052; H01M 10/0563;** Y02E 60/10

(86) International application number:
     **PCT/KR2020/009125**

(87) International publication number:
     **WO 2021/006704 (14.01.2021 Gazette 2021/02)**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **KH MA MD TN**

(30) Priority: **11.07.2019  KR 20190084031**

(71) Applicants:
     • **LG ENERGY SOLUTION, LTD.**
       **Seoul 07335 (KR)**
     • **IUCF-HYU (INDUSTRY-UNIVERSITY
       COOPERATION
       FOUNDATION HANYANG UNIVERSITY)**
       **Seoul 04763 (KR)**

(72) Inventors:
     • **KIM, Jeong Gil**
       **Daejeon 34122 (KR)**
     • **JUNG, Bum Young**
       **Daejeon 34122 (KR)**
     • **KIM, Han Su**
       **Seoul 07214 (KR)**
     • **KIM, A Young**
       **Seoul 07342 (KR)**
     • **JUNG, Ho Jae**
       **Suwon-si Gyeonggi-do 16293 (KR)**
     • **LEE, Ji Whan**
       **Gwacheon-si Gyeonggi-do 13818 (KR)**

(74) Representative: **Hoffmann Eitle
     Patent- und Rechtsanwälte PartmbB
     Arabellastraße 30
     81925 München (DE)**

(54)     **ELECTROLYTE FOR LITHIUM SECONDARY BATTERY, AND LITHIUM SECONDARY BATTERY
         COMPRISING SAME**

(57)     The present invention provides an electrolyte for a secondary battery, which includes a first electrolyte solution represented by Formula 1 and a second electrolyte solution represented by Formula 2, and a lithium secondary battery including the same.

[Formula 1]          $M^1N^1X^1\text{-}n(SO_2)$

[Formula 2]          $M^2N^2X^2\text{-}m(SO_2)$

(In Formula 1 and Formula 2, $M^1$ and $M^2$ are different from each other and are each independently an alkali metal, $N^1$ and $N^2$ are each independently at least one metal selected from the group consisting of an alkali metal, a transition metal, and a post-transition metal, $X^1$ and $X^2$ are each independently a halogen element, and n and m are each independently an integer of 1 to 4.)

EP 3 951 984 A1

**(Cont. next page)**

FIG. 1

**Description**

## TECHNICAL FIELD

**Cross-reference to Related Applications**

This application claims priority from Korean Patent Application No. 2019-0084031, filed on July 11, 2019, the disclosure of which is incorporated by reference herein.

**Technical Field**

The present invention relates to an electrolyte for a lithium secondary battery and a lithium secondary battery including the same, and more particularly, to an electrolyte for a lithium secondary battery, which has excellent low-temperature characteristics, and a lithium secondary battery including the same.

## BACKGROUND ART

Applications of lithium secondary batteries have been rapidly expanded from power sources of portable devices, such as mobile phones, notebook computers, digital cameras, and camcorders, to power sources of medium and large sized devices such as power tools, electric bicycles, hybrid electric vehicles (HEVs), and plug-in hybrid electric vehicles (plug-in HEVs, PHEVs). Demand for batteries, which may be used even in a low-temperature environment at 0°C or less in addition to a room-temperature environment, has also been increased as these application areas expand.

In general, a lithium secondary battery uses an organic electrolyte solution, wherein, since the organic electrolyte solution has a high freezing point, electron transferability and ion transferability are reduced in a low-temperature environment. Thus, since a lithium secondary battery using the organic electrolyte solution under low-temperature conditions may not achieve sufficient capacity, the lithium secondary battery may not operate well.

Therefore, there is a need to study an electrolyte for a lithium secondary battery having excellent electron transferability and ion transferability in order for the battery to be able to **stably** operate even under low-temperature conditions.

Prior Art Document

Korean Patent Application Laid-open Publication No. 2018-0025998

## DISCLOSURE OF THE INVENTION

**TECHNICAL PROBLEM**

An aspect of the present invention provides an electrolyte for a lithium secondary battery, which may excellently maintain capacity characteristics of the battery even in a case where the lithium secondary battery is operated under low-temperature conditions at 0°C or less, and a lithium secondary battery including the same.

**TECHNICAL SOLUTION**

According to an aspect of the present invention, there is provided an electrolyte for a lithium secondary battery which includes: a first electrolyte solution represented by Formula 1 below and a second electrolyte solution represented by Formula 2 below.

$$[\text{Formula 1}] \qquad M^1 N^1 X^1\text{-}n(SO_2)$$

$$[\text{Formula 2}] \qquad M^2 N^2 X^2\text{-}m(SO_2)$$

In Formula 1 and Formula 2,

$M^1$ and $M^2$ are each independently an alkali metal, but are different from each other,

$N^1$ and $N^2$ are each independently at least one metal selected from the group consisting of an alkali metal, a transition metal, and a post-transition metal,

$X^1$ and $X^2$ are each independently a halogen element, and

n and m are each independently an integer of 1 to 4.

For example, the first electrolyte solution may be $LiAlCl_4 \cdot 3SO_2$, and the second electrolyte solution may be $NaAlCl_4 \cdot 2SO_2$.

The first electrolyte solution and the second electrolyte solution may be included in a volume ratio of 9:1 to 1:9.

According to another aspect of the present invention, there is provided a lithium secondary battery including a positive electrode, a negative electrode, a separator, and the electrolyte for a lithium secondary battery.

## ADVANTAGEOUS EFFECTS

Since an electrolyte for a lithium secondary battery according to the present invention has high ionic conductivity, capacity characteristics are excellent even in a case where the lithium secondary battery is operated under low-temperature conditions at 0°C or less.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a charge and discharge graph at room temperature and low temperature of a lithium secondary battery prepared according to Example 1;

FIG. 2 is a charge and discharge graph at room temperature and low temperature of a lithium secondary battery prepared according to Comparative Example 1; and

FIG. 3 is a charge and discharge graph at room temperature and low temperature of a lithium secondary battery prepared according to Comparative Example 4.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may comprise plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

<Electrolyte for Lithium Secondary Battery>

An electrolyte for a lithium secondary battery according to the present invention includes a first electrolyte solution represented by Formula 1 below and a second electrolyte solution represented by Formula 2 below.

$$[\text{Formula 1}] \qquad M^1N^1X^1\text{-}n(SO_2)$$

$$[\text{Formula 2}] \qquad M^2N^2X^2\text{-}m(SO_2)$$

In Formula 1 and Formula 2,

$M^1$ and $M^2$ are each independently an alkali metal, but are different from each other,

$N^1$ and $N^2$ are each independently at least one metal selected from the group consisting of an alkali metal, a transition metal, and a post-transition metal,

$X^1$ and $X^2$ are each independently a halogen element, and

n and m are each independently an integer of 1 to 4.

In general, an organic electrolyte solution containing a lithium salt and an organic solvent has been used as an electrolyte of a lithium secondary battery, but, since the organic electrolyte solution is highly flammable, it may cause serious problems in safety during operation of the battery when the organic electrolyte solution is used. Furthermore, the organic electrolyte solution is stable at room temperature, but, since transfer of electrons and ions in the electrolyte solution is not smooth at a low temperature of 0°C or less, ionic conductivity is reduced, and thus, there is a problem that the battery does not operate because battery capacity is not sufficiently achieved. However, demand for a battery, which may be used even in a low-temperature environment, has been increased as application areas of the battery recently expand.

Thus, in order to solve the above-described problems, inventors of the present invention have devised an electrolyte for a lithium secondary battery which includes two or more different types of (inorganic) electrolytes.

The inorganic electrolyte according to the present invention may maintain high ionic conductivity while maintaining a liquid phase in a low-temperature environment. Thus, with respect to a lithium secondary battery in which the inorganic electrolyte is used, capacity is sufficiently achieved at low temperatures, and the lithium secondary battery may be operated normally.

Specifically, in Formula 1 and Formula 2,

$M^1$ and $M^2$ may each independently be at least one alkali metal selected from the group consisting of lithium (Li), sodium (Na), potassium (K), rubidium (Rb), and cesium (Cs) .

Also, $N^1$ and $N^2$ may each independently be at least one metal selected from the group consisting of aluminum (Al), gallium (Ga), copper (Cu), manganese (Mn), cobalt (Co), zinc (Zn), and palladium (Pd).

The halogen element may include at least one selected from the group consisting of fluorine (F), chlorine (Cl), bromine (Br), and iodine (I).

As a specific example, the first electrolyte solution may be $LiAlCl_4$-$3SO_2$, and the second electrolyte solution may be $NaAlCl_4$-$2SO_2$.

In a case in which the $LiAlCl_4$-$3SO_2$ is used as the electrolyte for a lithium secondary battery alone, low-temperature performance is degraded in comparison to a case where the $NaAlCl_4$-$2SO_2$ is mixed and used.

In contrast, in a case in which the $NaAlCl_4$-$2SO_2$ is used as the electrolyte for a lithium secondary battery alone, since sodium ions ($Na^+$) are only present in the electrolyte, resistance in the battery may be increased due to the absence of lithium ions ($Li^+$).

Thus, in the present invention, it is desirable to use the electrolyte for a lithium secondary battery which includes $LiAlCl_4$-$3SO_2$ and $NaAlCl_4$-$2SO_2$.

In this case, the first electrolyte solution and the second electrolyte solution may include the $LiAlCl_4$-$3SO_2$ and the $NaAlCl_4$-$2SO_2$ in a volume ratio of 9:1 to 1:9, preferably 9:1 to 2:8, and more preferably 9:1 to 4:6. In a case in which the $LiAlCl_4$-$3SO_2$ and the $NaAlCl_4$-$2SO_2$ are included in the above volume ratio and used, since an electrolyte with high ionic conductivity is provided while intercalation and de-intercalation of lithium are possible even in a low-temperature environment, the battery may be normally operated.

**<Lithium Secondary Battery>**

Next, a lithium secondary battery according to the present invention will be described.

The lithium secondary battery according to an embodiment of the present invention includes a positive electrode, a negative electrode, and the electrolyte for a lithium secondary battery, and may selectively further include a separator which may be disposed between the positive electrode and the negative electrode. In this case, since the electrolyte for a lithium secondary battery is the same as described above, a detailed description thereof will be omitted.

A capacity retention at 0°C compared to room temperature of the lithium secondary battery according to the present invention may be 96% or more, preferably 98% or more, and more preferably 98.5% or more. The capacity retention at 0°C of the lithium secondary battery according to the present invention is calculated by the following Equation 1.

[Equation 1]

$$\text{Capacity retention}(\%) \text{ at } 0°C = \{\text{capacity at } 0°C/\text{capacity at room temperature}(25°C)\} \times 100$$

The capacity retention is calculated by using lithium intercalation capacity and deintercalation capacity which are measured using charge/discharge equipment in a closed chamber where temperature and humidity are maintained.

The lithium secondary battery according to the present invention has better low-temperature capacity characteristics than a lithium secondary battery using a conventional organic electrolyte or a lithium secondary battery using an inorganic electrolyte containing a single sulfur dioxide-alkali metal salt.

The positive electrode may be prepared by coating a positive electrode collector with a positive electrode active material slurry including a positive electrode active material, a binder for an electrode, a conductive agent for an electrode, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. In this case, the positive electrode collector may have fine surface roughness to improve bonding strength with the positive electrode active material, and the positive electrode collector may be used in various shapes such as a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. Specifically, the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y1}Mn_{Y1}O_2$ (where $0<Y1<1$), $LiMn_{2-Z1}Ni_{Z1}O_4$ (where $0<Z1<2$), etc.), lithium-nickel-cobalt-based oxide (e.g., $LiNi_{1-Y2}Co_{Y2}O_2$ (where $0<Y2<1$), lithium-manganese-cobalt-based oxide (e.g., $LiCo_{1-Y3}Mn_{Y3}O_2$ (where $0<Y3<1$), $LiMn_{2-Z2}Co_{Z2}O_4$ (where $0<Z2<2$), etc.), lithium-nickel-manganese-cobalt-based oxide (e.g., $Li(Ni_{p1}Co_{q1}Mn_{r1})O_2$ (where $0<p1<1$, $0<q1<1$, $0<r1<1$, and $p1+q1+r1=1$) or $Li(Ni_{p2}Co_{q2}Mn_{r2})O_4$ (where $0<p2<2$, $0<q2<2$, $0<r2<2$, and $p2+q2+r2=2$), etc.), or lithium-nickel-cobalt-transition metal (M) oxide (e.g., $Li(Ni_{p3}Co_{q3}Mn_{r3}M_{S1})O_2$ (where M is selected from the group consisting of aluminum (Al), iron (Fe), vanadium (V), chromium (Cr), titanium (Ti), tantalum (Ta), magnesium (Mg), and molybdenum (Mo), and p3, q3, r3, and s1 are atomic fractions of each independent elements, wherein $0<p3<1$, $0<q3<1$, $0<r3<1$, $0<S1<1$, and $p3+q3+r3+S1=1$), etc.), and any one thereof or a compound of two or more thereof may be included.

The binder for an electrode is a component that assists in the binding between the positive electrode active material and the electrode conductive agent and in the binding with the current collector. Specifically, the binder may include a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The conductive agent for an electrode is a component for further improving the conductivity of the positive electrode active material. Any electrode conductive agent may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may include acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

The solvent may include an organic solvent, such as N-methyl-2-pyrrolidone (NMP), and may be used in an amount such that desirable viscosity is obtained when the positive electrode active material as well as optionally the binder for a positive electrode and the conductive agent for a positive electrode is included.

The negative electrode, for example, may be prepared by coating a negative electrode collector with a negative electrode active material slurry including a negative electrode active material, a binder for an electrode, a conductive agent for an electrode, and a solvent.

The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one compound selected from the group consisting of a silicon-based compound represented by $SiO_x$ ($0<x\leq2$), natural graphite, artificial graphite, graphite, a carbonaceous material; lithium-containing titanium composite oxide (LTO); metals (Me) such as tin (Sn), Li, Zn, Mg, cadmium (Cd), cerium (Ce), nickel (Ni), or Fe; alloys composed of the metals (Me); oxides of the metals (Me); and composites of the metals (Me) and carbon.

Since the binder for an electrode, the electrode conductive agent, and the solvent are the same as described above, detailed descriptions thereof will be omitted.

A typical porous polymer film used as a typical separator, for example, a porous polymer film prepared from a polyolefin-based polymer, such as an ethylene homopolymer, a propylene homopolymer, an ethylene-butene copolymer, an ethylene-hexene copolymer, and an ethylene-methacrylate copolymer, may be used alone or in a lamination therewith as the separator, and a polyolefin-based porous polymer film coated with inorganic particles (e.g.: $Al_2O_3$) or a typical porous nonwoven fabric, for example, a nonwoven fabric formed of high melting point glass fibers or polyethylene terephthalate fibers may be used, but the present invention is not limited thereto.

Hereinafter, the present invention will be described in more detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

[Examples]

**1. Example 1**

**(1) Preparation of Electrolyte for Lithium Secondary Battery**

An electrolyte for a lithium secondary battery was prepared by mixing $LiAlCl_4$-$3SO_2$ and $NaAlCl_4$-$2SO_2$ in a volume ratio of 8:2.

**(2) Coin-type Lithium Secondary Battery Preparation**

Graphite, a styrene-butadiene rubber, and carboxymethylcellulose were mixed in a weight ratio of 96:2:2 and then dispersed in deionized water, as a solvent, to prepare a negative electrode active material slurry. A negative electrode collector (Cu thin film) was coated with the negative electrode active material slurry, and dried at 100°C to 150°C for 2 hours to prepare a negative electrode.

The negative electrode, a separator formed of glass fibers (GFF, glassy fiber filter), and a lithium metal counter electrode were sequentially stacked, and, after the stacked structure was disposed in a coin-type battery case (CR2032 cell; button cell with a diameter of 20 mm and a height of 3.2 mm), the electrolyte for a lithium secondary battery was injected to prepare a lithium secondary battery.

**2. Example 2**

An electrolyte and a lithium secondary battery were prepared in the same manner as in Example 1 except that $LiAlCl_4$-$3SO_2$ and $NaAlCl_4$-$2SO_2$ were mixed in a volume ratio of 7:3 when the electrolyte for a lithium secondary battery was prepared.

**3. Example 3**

An electrolyte and a lithium secondary battery were prepared in the same manner as in Example 1 except that $LiAlCl_4$-$3SO_2$ and $NaAlCl_4$-$2SO_2$ were mixed in a volume ratio of 6:4 when the electrolyte for a lithium secondary battery was prepared.

[Comparative Examples]

**1. Comparative Example 1**

An electrolyte and a lithium secondary battery were prepared in the same manner as in Example 1 except that $LiAlCl_4$-$3SO_2$ was only used as the electrolyte for a lithium secondary battery.

**2. Comparative Example 2**

An electrolyte and a lithium secondary battery were prepared in the same manner as in Example 1 except that $NaAlCl_4$-$2SO_2$ was only used as the electrolyte for a lithium secondary battery.

### 3. Comparative Example 3

#### (1) Preparation of Electrolyte for Lithium Secondary Battery

$LiAlCl_4$-$3SO_2$ was only used as an electrolyte for a lithium secondary battery.

#### (2) Coin-type Lithium Secondary Battery Preparation

After a lithium metal electrode was impregnated in $NaAlCl_4$-$2SO_2$ for one day, $NaAlCl_4$-$2SO_2$ was again removed with $SOCl_2$ (>99.5%, DAEJUNG CHEMICALS & METALS, CO., LTD.) and vacuum drying was performed at room temperature (25°C) for 12 hours to prepare a negative electrode.

The negative electrode, a separator formed of glass fibers (GFF, glassy fiber filter), and a lithium metal counter electrode were sequentially stacked, and, after the stacked structure was disposed in a coin-type battery case, the electrolyte for a lithium secondary battery was injected to prepare a lithium secondary battery.

### 4. Comparative Example 4

An electrolyte and a lithium secondary battery were prepared in the same manner as in Example 1 except that an organic solvent (ethylene carbonate (EC):ethyl methyl carbonate (EMC)=3:7 volume ratio), in which 1 M $LiPF_6$ was dissolved, was used as the electrolyte for a lithium secondary battery.

### [Experimental Example]

### 1. Experimental Example 1: Low-temperature (0°C) Storage Characteristics (Capacity Retention) Measurement

After formation was performed on each of the lithium secondary batteries prepared in Examples 1 to 3 and Comparative Examples 1 to 4 at a current of 37 mA (0.1 C rate), gas in the battery was removed (degassing process). After each lithium secondary battery having gas removed therefrom was moved to charge/discharge equipment at room temperature (25°C), each lithium secondary battery was charged at 0.1 C rate to 0.005 V under a constant current/constant voltage condition, cut-off charged at 0.05 C, and discharged at 0.1 C to 2.0 V. In this case, after the above charge/discharge were performed two times, discharge capacity was measured using charge/discharge equipment (manufacturer: TOYO, 5 V), and the discharge capacity in this case was set to initial discharge capacity.

Subsequently, the lithium secondary batteries prepared in Examples 1 to 3 and the lithium secondary batteries prepared in Comparative Examples 1 to 4 were disposed in a thermally insulated chamber set at 0°C and then stored for 12 hours. Thereafter, after each lithium secondary battery was moved to charge/discharge equipment at room temperature (25°C), each lithium secondary battery was charged at 0.1 C rate to 0.005 V under a constant current/constant voltage condition, cut-off charged at 0.05 C, and discharged at 0.1 C to 2.0 V. Discharge capacity after the above charge/discharge were performed three times was measured using charge/discharge equipment (manufacturer: EC-Lab, 5 V, 5 A). The discharge capacity in this case was set to discharge capacity at 0°C to calculate capacity retention (%) at 0°C compared to the initial discharge capacity using the following Equation 1, and the results thereof are presented in Table 1 below.

[Equation 1]

$$\text{Capacity retention(\%) at } 0°C = \{\text{capacity at } 0°C / \text{capacity at room temperature}(25°C)\} \times 100$$

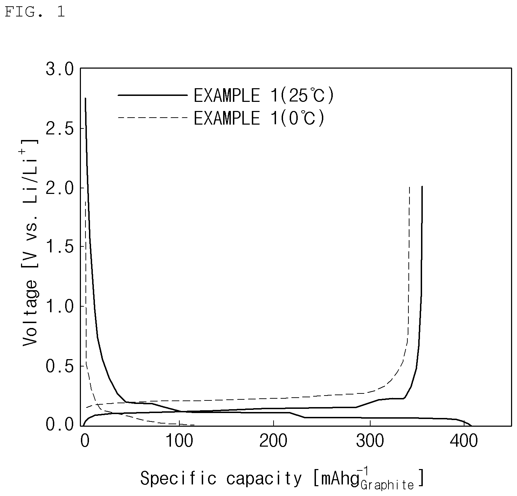

Also, whether the secondary batteries prepared in Example 1, Comparative Example 1, and Comparative Example 4 were charged and discharged at room temperature (25°C) and low temperature (0°C) or not are illustrated in FIG. 1, FIG. 2, and FIG. 3, respectively. In this case, in FIGS. 1 to 3, a graph rising from left to right means that lithium ions are deintercalated (discharged) from graphite, and a graph decreasing from left to right means that lithium ions are intercalated (charged) into graphite.

[Table 1]

| | Room temperature (25°C) discharge capacity (mAh/g) | Discharge capacity after low-temperature (0°C) storage (mAh/g) | Capacity retention after low-temperature (0°C) storage (%) |
|---|---|---|---|
| Example 1 | 355.0 | 342.0 | 96.3 |
| Example 2 | 359.3 | 355.0 | 98.8 |
| Example 3 | 363.3 | 360.1 | 99.1 |
| Comparative Example 1 | 357.6 | 330.1 | 92.3 |
| Comparative Example 2 | 6.7 | 6.4 | 95.5 |
| Comparative Example 3 | 353.6 | 322.5 | 91.2 |
| Comparative Example 4 | 349.9 | 269.8 | 77.1 |

Referring to Table 1, with respect to the lithium secondary batteries of Examples 1 to 3, it may be confirmed that capacity retentions were excellently maintained at about 96.3% or more even after low-temperature storage.

In contrast, with respect to the lithium secondary battery of Comparative Example 1, since $NaAlCl_4\text{-}2SO_2$ was not included in the electrolyte, it may be confirmed that discharge capacity retention after low-temperature storage was reduced in comparison to those of the lithium secondary batteries of Examples 1 to 3.

Also, with respect to the lithium secondary battery of Comparative Example 2, since $LiAlCl_4\text{-}3SO_2$ was not included in the electrolyte, movable lithium ions were not present in the electrolyte, and thus, it may be confirmed that the electrolyte was difficult to use as an electrolyte because discharge capacity at room temperature as well as discharge capacity retention after low-temperature storage was lower than those of the lithium secondary batteries of Examples 1 to 3.

Furthermore, with respect to the lithium secondary battery of Comparative Example 3, sodium ions were partially present in the electrolyte by introducing $NaAlCl_4\text{-}2SO_2$ onto the negative electrode, but, since the $NaAlCl_4\text{-}2SO_2$ was not present as the electrolyte, ionic conductivity at low temperature was lower than those of the lithium secondary batteries of Examples 1 to 3, and thus, it may be confirmed that capacity retention after low-temperature storage was low.

Also, with respect to Comparative Example 4, as a common organic electrolyte that did not include both $NaAlCl_4\text{-}2SO_2$ and $LiAlCl_4\text{-}3SO_2$, it may be understood that capacity retention after low-temperature storage was significantly reduced in comparison to those of the lithium secondary batteries of Examples 1 to 3.

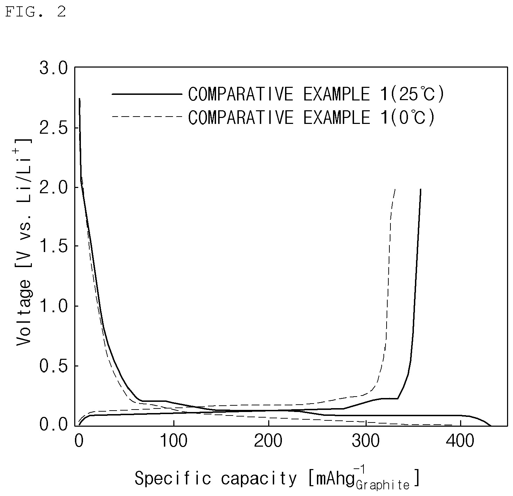

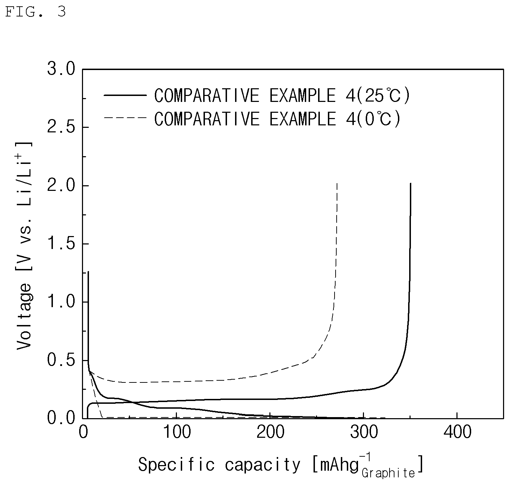

Referring to FIGS. 1 and 2, it may be understood that charge and discharge of the lithium secondary batteries of Example 1 and Comparative Example 1 were smoothly performed even at low temperature (0°C) in addition to room temperature (25°C). In contrast, referring to FIG. 3, since charge and discharge of the lithium secondary battery of Comparative Example 4 were not smoothly performed at low temperature (0°C), it may be understood that the voltage dropped and capacity characteristics were degraded.

**Claims**

1. An electrolyte for a lithium secondary battery, the electrolyte comprising:

   a first electrolyte solution represented by Formula 1; and
   a second electrolyte solution represented by Formula 2:

   [Formula 1]     $M^1N^1X^1\text{-}n(SO_2)$

   [Formula 2]     $M^2N^2X^2\text{-}m(SO_2)$

   wherein, in Formula 1 and Formula 2,
   $M^1$ and $M^2$ are different from each other, and are each independently an alkali metal,
   $N^1$ and $N^2$ are each independently at least one metal selected from the group consisting of an alkali metal, a transition metal, and a post-transition metal,

$X^1$ and $X^2$ are each independently a halogen element, and
n and m are each independently an integer of 1 to 4.

2. The electrolyte for a lithium secondary battery of claim 1, wherein $M^1$ and $M^2$ each independently comprise at least one selected from the group consisting of lithium (Li), sodium (Na), potassium (K), rubidium (Rb), and cesium (Cs).

3. The electrolyte for a lithium secondary battery of claim 1, wherein $N^1$ and $N^2$ each independently comprise at least one selected from the group consisting of aluminum (Al), gallium (Ga), copper (Cu), manganese (Mn), cobalt (Co), zinc (Zn), and palladium (Pd).

4. The electrolyte for a lithium secondary battery of claim 1, wherein the first electrolyte solution is $LiAlCl_4$-$3SO_2$.

5. The electrolyte for a lithium secondary battery of claim 1, wherein the second electrolyte solution is $NaAlCl_4$-$2SO_2$.

6. The electrolyte for a lithium secondary battery of claim 1, wherein the first electrolyte solution and the second electrolyte solution are present in a volume ratio of 9:1 to 1:9.

7. The electrolyte for a lithium secondary battery of claim 1, wherein the first electrolyte solution and the second electrolyte solution are present in a volume ratio of 9:1 to 2:8.

8. A lithium secondary battery comprising a positive electrode; a negative electrode; a separator; and the electrolyte for a lithium secondary battery of claim 1.

9. The lithium secondary battery of claim 8, wherein the lithium secondary battery has a capacity retention at 0°C of 96% or more, wherein the capacity retention is calculated by Equation 1;

```
[Equation 1]

Capacity retention(%) at 0°C={capacity at 0°C/capacity

at room temperature(25°C)}×100.
```

10. The lithium secondary battery of claim 9, wherein the lithium secondary battery has the capacity retention at 0°C of 98% or more.

FIG. 1

FIG. 2

FIG. 3

## INTERNATIONAL SEARCH REPORT

| | International application No. |
|---|---|
| | **PCT/KR2020/009125** |

**A. CLASSIFICATION OF SUBJECT MATTER**

**H01M 10/0563**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0563; H01M 10/052; H01M 10/0562; H01M 10/0567; H01M 10/0568; H01M 4/131; H01M 4/485

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전해질(electrolyte), LiAlCl4-3SO2, NaAlCl4-2SO2, 저온(low temperature), 용량 (capacity)

**C. DOCUMENTS CONSIDERED TO BE RELEVANT**

| Category* | Citation of document, with indication, where appropriate, of the relevant passages | Relevant to claim No. |
|---|---|---|
| X | LI, R. et al. A LiAlCl 4· 3SO 2-NaAlCl 4· 2SO 2 binary inorganic electrolyte with improved electrochemical performance for Li-metal batteries. Ionics. vol. 25, no. 10, pp. 4751-4760, 10 May 2019 See abstract; page 4752, right column, first paragraph, fifth paragraph; and page 4757, right column, second paragraph. | 1-10 |
| A | US 2015-0140422 A1 (BATTELLE MEMORIAL INSTITUTE) 21 May 2015. See claims 1 and 14. | 1-10 |
| A | KR 10-2018-0035977 A (KOREA ELECTRONICS TECHNOLOGY INSTITUTE et al.) 09 April 2018. See claims 1 and 8. | 1-10 |
| A | KR 10-1901658 B1 (KOREA ELECTRONICS TECHNOLOGY INSTITUTE) 01 October 2018. See claims 1 and 7. | 1-10 |

[✓] Further documents are listed in the continuation of Box C.  [✓] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 October 2020** | **16 October 2020** |

| Name and mailing address of the ISA/KR | Authorized officer |
|---|---|
| **Korean Intellectual Property Office** **Government Complex Daejeon Building 4, 189, Cheongsa-ro, Seo-gu, Daejeon, Republic of Korea** **35208** | |
| Facsimile No. **+82-42-481-8578** | Telephone No. |

Form PCT/ISA/210 (second sheet) (July 2019)

EP 3 951 984 A1

## INTERNATIONAL SEARCH REPORT

| International application No. |
| --- |
| **PCT/KR2020/009125** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2018-0046915 A (FIELD UPGRADING USA, INC.) 09 May 2018. See claims 1-20; and paragraph [0033]. | 1-10 |

Form PCT/ISA/210 (second sheet) (July 2019)

15

**INTERNATIONAL SEARCH REPORT**
Information on patent family members

International application No.

**PCT/KR2020/009125**

| Patent document cited in search report | | | Publication date (day/month/year) | Patent family member(s) | | | Publication date (day/month/year) |
|---|---|---|---|---|---|---|---|
| US | 2015-0140422 | A1 | 21 May 2015 | US | 2014-0302354 | A1 | 09 October 2014 |
| | | | | US | 2014-0302400 | A1 | 09 October 2014 |
| | | | | US | 2014-0302404 | A1 | 09 October 2014 |
| | | | | US | 2014-0302422 | A1 | 09 October 2014 |
| | | | | US | 9112243 | B2 | 18 August 2015 |
| | | | | US | 9525191 | B2 | 20 December 2016 |
| | | | | WO | 2014-168671 | A1 | 16 October 2014 |
| | | | | WO | 2014-168672 | A1 | 16 October 2014 |
| | | | | WO | 2014-168691 | A1 | 16 October 2014 |
| KR | 10-2018-0035977 | A | 09 April 2018 | None | | | |
| KR | 10-1901658 | B1 | 01 October 2018 | CN | 107887646 | A | 06 April 2018 |
| | | | | EP | 3301744 | A1 | 04 April 2018 |
| | | | | JP | 2018-056107 | A | 05 April 2018 |
| | | | | JP | 6283735 | B1 | 21 February 2018 |
| | | | | KR | 10-2018-0035971 | A | 09 April 2018 |
| | | | | US | 2018-0090786 | A1 | 29 March 2018 |
| KR | 10-2018-0046915 | A | 09 May 2018 | CA | 2983001 | A1 | 20 October 2016 |
| | | | | CN | 107851862 | A | 27 March 2018 |
| | | | | EP | 3284134 | A1 | 21 February 2018 |
| | | | | EP | 3284134 | A4 | 14 November 2018 |
| | | | | JP | 2018-511922 | A | 26 April 2018 |
| | | | | US | 10734686 | B2 | 04 August 2020 |
| | | | | US | 2016-0308253 | A1 | 20 October 2016 |
| | | | | WO | 2016-168727 | A1 | 20 October 2016 |

Form PCT/ISA/210 (patent family annex) (July 2019)

**REFERENCES CITED IN THE DESCRIPTION**

**Patent documents cited in the description**

- KR 20190084031
- KR 20180025998